Europäisches Patentamt

European Patent Office

Office européen des brevets

(11) Publication number: **0 360 262**
**A2**

# EUROPEAN PATENT APPLICATION

(21) Application number: **89117456.7**

(22) Date of filing: **21.09.89**

(51) Int. Cl.5: **C08G 61/08**

(30) Priority: **21.09.88 US 247231**

(43) Date of publication of application:
**28.03.90 Bulletin 90/13**

(84) Designated Contracting States:
**BE DE ES FR GB IT NL SE**

(71) Applicant: **HERCULES INCORPORATED**
**Hercules Plaza**
**Wilmington Delaware 19894(US)**

(72) Inventor: **Martin, Andrea Elizabeth**
**RD No.1, Box 121B Sunny Dell Road**
**Avondale Pennsylvania 19311(US)**

(74) Representative: **Lederer, Franz, Dr. et al**
**Van der Werth, Lederer & Riederer**
**Patentanwälte Lucile-Grahn-Strasse 22**
**D-8000 München 80(DE)**

(54) Binuclear metathesis catalysts.

(57) A process for making a catalyst suitable for the metathesis polymerization of strained ring cycloolefin monomers such as dicyclopentadiene, and comprising the steps of dissolving a tungsten compound consisting of $WOCl_4$ or a combination of $WOCl_4$ and $WCl_6$ in a solvent, and solubilizing and stabilizing the tungsten compound by adding a phenolic compound and a chelating agent or a Lewis base to the solution of the tungsten compound, and adding to the solution of the tungsten compound a halide complex of a transition metal belonging to Group IVB or Group VB of the Periodic Table, and the use of the catalyst, are disclosed.

EP 0 360 262 A2

## BINUCLEAR METATHESIS CATALYSTS

This invention relates to a process for making a catalyst suitable for the metathesis polymerization of strained ring cycloolefin monomers such as dicyclopentadiene and comprising a tungsten-containing metathesis catalyst such as $WOCl_4$, and its use to make crosslinked polymers of dicyclopentadiene (DCPD).

The preparation of thermoset cycloolefin polymers via metathesis catalysts is well known, for instance from U.S. Patents 4,400,340 and 4,520,181, which teach preparation of such polymers from dicyclopentadiene and other similar cycloolefins via a two-part reaction injection molding (RIM) technique. A first stream, including the monomer and a homogeneous metathesis catalyst (more properly referred to as a catalyst precursor), which is solubilized and stabilized to prevent premature polymerization, and a second stream, including a catalyst activator, a conventional reaction rate moderator, and monomer, are combined in a mixing head and immediately injected into a mold where polymerization and molding to a permanently fixed shape take place. These polymers have high impact strength and high modulus.

In the absence of a conventional reaction rate moderator in the activator stream, polymerization takes place extremely rapidly even at low temperatures, so rapidly that it is not unusual for the monomer to polymerize to a solid, immobile condition before the mixed streams can be transferred to the mold. Even with a reaction rate moderator the total time from mixing until polymerization is substantially complete is still just a matter of seconds.

For a RIM system to be of use with a particular monomer, certain requirements must be met: (1) the individual streams must be stable and must have reasonable shelf-life under ambient conditions; (2) it must be possible to mix the streams thoroughly without their setting up in the mixing head; (3) when injected into the mold, the materials must set up to a solid system rapidly; and (4) any additives fillers, stabilizers, pigments, etc. must be added before the material sets up. Therefore, the additives selected must not inferfere with the polymerization reaction.

In the typical system, according to the above-mentioned U.S. Patents, the catalyst component is a homogeneous halide of tungsten of molybdenum and the activator is an alkyl aluminum compound. The reaction rate moderator can be an ester, ether, ketone or nitrile.

Known homogeneous olefin metathesis polymerization catalysts are commonly based on $WCl_6$. A catalyst solution is prepared by dissolving $WCl_6$ in an inert solvent, usually an aromatic solvent such as toluene or chlorobenzene and adding it to the monomer.

Studies have shown that it is actually $WOCl_4$, which forms by contact with moisture, which is the major contributor to activity of catalysts based on $WCl_6$. Pure $WOCl_4$ is also an effective metathesis catalyst. U.S. Patent 4,696,985 discloses that a mixture of $WCl_6$ and $WOCl_4$ activated with an aluminum alkyl or an aluminum alkyl halide, has greater activity for metathesis of strained cyclic olefins that either component alone. The mixture of $WCl_6$ and $WOCl_4$ is achieved by the controlled addition of an oxygen donor to $WCl_6$.

The catalyst is solubilized by addition of a phenolic compound, such as an alkyl phenol. This intermediate solution has excellent metathesis catalyst activity. However, it has a short shelf life because a slow polymerization of the monomer occurs. Thus, a stabilizing agent, typically a Lewis base, and preferably a chelating agent, is added. This may be a material such as acetylacetone (2,4-pentanedione, abbreviated as acac).

When this catalyst solution is added to the monomer stream, exothermic polymerization takes place within a short time, frequently less than one minute. Other materials, such as elastomers, may be incorporated into either stream or into both streams. The elastomer imparts viscosity, which improves the processability and may also alter the polymer mechanical properties.

The catalyst should have sufficient activity that the polymerization is essentially complete, so that the amount of residual monomer is minimized. The presence of residual monomer may have a deleterious effect on properties, such as stiffness, and may impart an objectionable odor to the molded article. The known homogeneous catalysts based on tungsten are the most active available, but there is a need for an improved polymerization catalyst for cycloolefins having increased activity, to promote more complete polymerization of the monomer.

Catalysts containing soluble compounds of two different transition metals are also known and are commonly referred to a binuclear or bimetallic catalysts. For instance, two-part catalysts comprising complexes of two different transition metals, including $TiO_2$ added to $MoO_3/Al_2O_3$, and Mo and W on a support of chromium on silica, are disclosed in Angew. Chem. 85, 148 (1973) and in Angew. Chem. Int. Ed. Engl. 27, 275 (1988) respectively. Those disclosed catalysts may have satisfactory activity but are unsuitable for bulk metathesis polymerization for various reasons, including side-reaction formation and difficulty in separating the catalyst from the polymer.

A catalyst composition that has a very high activity in the ring-opening polymerization of norbornene derivatives having at least one polar substituent, and comprising a reaction mixture of a compound of W, Mo, Re or Ta, an organometallic compound of an elements of Groups IA, IIA, IIB and IIIA of the Deming Periodic Table, and a compound of V, Cr, Mn, or one of the elements of Groups IVB and VIII of the Deming Periodic Table, is disclosed in U.S. Patent 4,176,220. There is no disclosure of a process for making a catalyst suitable for the metathesis polymerization of strained ring cycloolefin monomers such a dicyclopentadiene.

According to the invention, a process for making a catalyst composition having high activity relative to known catalysts suitable for the metathesis polymerization of strained ring cycloolefin monomers such as dicyclopentadiene, and comprising the steps of dissolving a tungsten compound consisting of WOCl₄ or a combination of WOCl₄ and WCl₆ in a solvent, and solubilizing and stabilizing the tungsten compound by adding a phenolic compound (or an alcoholic compound conventionally used in the same manner) and a chelating agent or a Lewis base to the solution of the tungsten compound, is characterized in that to the solution of the tungsten compound is added a halide complex of a transition metal selected from the group consisting of Group IVB and Group VB of the Periodic Table; including titanium, zirconium, hafnium, vanadium, niobium and tantalum, in a mole ratio of halide complex of transition metal to the tungsten compound of from about 1:2 to about 2.5:1.

The binuclear catalyst compositions made by the process according to the invention, when activated by typical metathesis catalyst activators, are effective in the polymerization of strained ring cycloolefin monomers to produce thermoset polymers having high impact strength and high modulus.

Preferably, the halide complex of a transition metal from Group IVB or VB is in a high oxidation state, and the preferred metals are titanium, tantalum and niobium. Complexes comprising titanium tetrachloride, tantalum pentachloride, and niobium pentachloride are more preferred. It is desirable that the transition metal halide complexes do not by themselves have activity for catalyzing metathesis polymerization, so that premature polymerization of the catalyst monomer solution does not occur.

The preferred monomer is dicyclopentadiene, which is the commercially available endo-DCPD (3a,4,7,7a tetrahydro-4, 7-methano-1H-indene). The exo-isomer, while not commercially available, can also be used. The commercially available material should be purified in order to remove impurities that inhibit the polymerization. The low boiling fraction should be removed. This can be done by stripping away several percent of the unsaturated four to six carbon atom volatiles, i.e., the volatiles distilled below 100° C at about 90±3 torr absolute pressure. It is often desirable to purify the starting material even further by treatment with an absorbent such as molecular sieves, alumina or silica gel. Additionally, the water content of the starting material should be below about 100 ppm. The presence of water interferes with polymerization by hydrolysis of both the catalyst and the activator components of the catalyst system. Water can be removed by azeotropic distillation under reduced pressure.

As used herein, unless otherwise specified, percentages are in percent by weight, and "solvent" means a fluid in which the monomer or catalyst is readily soluble.

Preferably, the purified cycloolefin to be polymerized contains at least 50 percent dicyclopentadiene, and the polymerization is carried out by a two-part RIM metathesis-catalyst system, in which the catalyst-containing part contains the binuclear catalyst composition according to the invention, and the other part contains the activator, which conventionally is an alkylaluminum compound in which the alkyl group contains one to ten carbon atoms, normally a trialkylaluminum, alkylaluminum dihalide or dialkylaluminum halide, or a mixture of these. In the preferred alkylaluminum compound the alkyl group is octyl. Other metathesis catalyst activators, such as alkyl tin reagents, may also be used, but being poorer Lewis acids, they are preferably used with catalysts in which the Lewis base stabilizer (such as acetylacetone) has been omitted.

In the process according to the invention, the preferred phenolic compound is phenol, an alkyl phenol, a halogenated phenol, or a phenolate salt, more preferably, t-butyl phenol, octyl phenol or nonyl phenol, the preferred phenolate salt being lithium phenoxide or sodium phenoxide. The preferred molar ratio of tungsten compound to phenolic compound is from about 1:1 to about 1:3.

The preferred chelating compound is an acetylacetone or an alkyl acetoacetate, and preferably the alkyl group has one to ten carbon atoms and is present in an amount such that the mole ratio of catalyst to chelating agent is from about 1:1 to about 1:3. The preferred Lewis base is a nitrile or an ether, more preferably benzonitrile or tetrahydrofuran.

Preferably the catalyst solution is made by forming a slurry of the tungsten compound and the solubilizing phenolic compound in an organic solvent, which may be an aromatic solvent such as toluene, benzene, or chlorobenzene, dichlorobenzene, or trichlorobenzene, or a chlorinated hydrocarbon such as

3

methylene chloride. It is desirable to use a solvent that does not react with the transition metal complex and which minimizes the quantity of solvent used.

While the solution is stirred, a stream of a dry inert gas, such as nitrogen, is passed through the solution to remove any hydrogen chloride. Alternatively, a phenolic salt, such as a lithium or sodium phenoxide, can be added to a slurry of the tungsten compound in the organic solvent, the mixture is stirred until essentially all the tungsten compound is dissolved, and precipitated inorganic salt is removed by filtration of centrifugation. The chelating agent or a Lewis base can then be added to the solution of the tungsten compound. All of these steps should be carried out in the absence of moisture and air to prevent deactivation of the catalyst.

While the improvement in the stability and shelf-life of the catalyst/monomer solution is obtained whether the second transition metal component of the binuclear catalyst is added before or after the phenolic compound, best results are obtained if the complexing agent is added after the tungsten-containing catalyst solution has been prepared. Also, if the transition metal halide is added prior to addition of the chelating compound, the activity of the catalyst is adversely affected.

The transition metal may be added either to the tungsten solution before mixing with monomer, or to the monomer/tungsten catalyst solution after it has been prepared.

The mole ratio of transition metal halide complex to tungsten compound of from about 1:2 to about 2.5:1 is achieved if from about 0.5 to about 2.5 moles of a transition metal halide complex is added per mole of tungsten compound catalyst.

If the transition metal complex is a liquid, as in the case of $TiCl_4$, or is easily dissolved in the tungsten solution or in the monomer/tungsten catalyst solution, it may be added directly. Otherwise, it may be added in solution in a suitable aromatic solvent. If its solubility is poor, the transition metal complex may be solubilized in the same fashion as the tungsten component, by the addition of a phenol, an alkyl phenol, or a halogenated phenol.

When purified cycloolefin, such as dicyclopentadiene, is added to this catalyst solution it forms a mixture that is stable and has a shelf-life of several months.


EXAMPLE 1


Preparation of the Tungsten Catalyst Solution


In Example 1, a 0.05 M solution of a tungsten-containing catalyst solution is prepared by first preparing pure $WOCl_4$, according to the procedure disclosed by Pedersen et al., J. Am. Chem. Soc., 1982, 104, 7483-7491, by reaction of $WCl_6$ and $Me_3SiOMe$ in $CH_2Cl_2$. Finely ground $WCl_6$ (54.5 g, 0.14M) is suspended in dichloromethane (350 ml) and the mixture stirred vigorously while a dichloromethane solution (40 ml) of $Me_3SiOMe$ (14.3 g, 0.14M) is added dropwise over a 4 hour period. The mixture is filtered, and the orange precipitate washed with pentane and dried in vacuo. The dichloromethane is removed from the filtrate in vacuo, leaving a red-orange solid. This material along with the above orange precipitate is sublimed at 80° C under vacuum to give 42.7 g (91%) of pure, crystalline $WOCl_4$. Under an inert atmosphere, such as a $N_2$ atmosphere, 0.6158 grams (0.00180 mole) $WOCl_4$ is weighed into a vessel. Next, 36.0 ml dry toluene is added to give a reddish slurry. To the slurry is added 1.80 ml of a 1.0 M solution of nonylphenol (0.00180 mole) in toluene. The solution is stirred and sparged with nitrogen for 1 hour to remove the byproduct HCl. Finally, 0.18 ml acetylacetone (acac) (0.00180 mole) is added, and the solution is again sparged for 1 hour. In this and all the following examples, phenol is used as a shorthand for nonylphenol and for simplicity the solution is referred to as W/phenol/acac.


EXAMPLE 2


Polymerizations with Tungsten Catalyst Solution and $TiCl_4$

In Example 2, a monomer solution containing the binuclear catalyst is prepared. A 15 x 125 mm test tube, capped with an unextracted rubber stopper, is sparged with nitrogen for 10 minutes. Five ml of dicyclopentadiene (DCPD) is placed in the test tube which is sparged for an additional 10 minutes. To this test tube is added 0.38 ml of the catalyst solution of Example 1 and 0.57 ml of a 0.1 M solution of $TiCl_4$ in toluene. Polymerization is initiated at 26-28° C by injecting 0.16 ml of a 0.35 M solution of tri-n-octylaluminum (TNOA) and bis(methoxyethyl) ether (diglyme, a reaction rate moderator) in toluene. The time to exothermic cure (induction time) and the exotherm are recorded with a thermocouple. Typical results are shown below in Table 1, along with comparative examples omitting first the $WOCl_4$ and then the $TiCl_4$. In the absence of the tungsten compound, no exothermic cure is obtained, demonstrating the inability of $TiCl_4$ to polymerize DCPD without the other component of the binuclear catalyst. In the absence of the titanium compound, the tungsten compound can polymerize DCPD, but the activity is poorer as shown by the induction times.

TABLE 1

| DCPD/W/Ti/Al Mole Ratio | Exotherm (°C) | Induction Time (seconds) |
|---|---|---|
| 2000/1/3/3 | 157 | 25 |
| 2000/0/3/3 | none | no cure |
| 2000/1/0/3 | 165 | 85 |

EXAMPLES 3 AND 4

Polymerizations with $TiCl_4$/$WOCl_4$ Binuclear Catalyst Using Different Aluminum Alkyl Activators

In Examples 3 and 4 the procedure of Example 2 is followed, except that the TNOA/Diglyme solution is replaced with a mixture of TNOA and DOAI (di-n-octylaluminum iodide), moderated with diglyme, or DEAC (diethylaluminum chloride), moderated with di-n-butyl ether. Results are given in Table 2. As shown, increasing the level of $TiCl_4$ improves the induction time, with either an improvement or essentially no effect on the residual monomer level.

TABLE 2

| DCPD/W/Ti/Al Mole Ratio | Al Type | Exotherm (°C) | Induction Time (sec) | Residual Monomer (%) |
|---|---|---|---|---|
| Example 3 | | | | |
| 2000/1/1/3 | TNOA/DOAI | 164 | 50 | 0.4 |
| 2000/1/.5/3 | TNOA/DOAI | 168 | 75 | 0.2 |
| Example 4 | | | | |
| 2000/1/1/1.5 | DEAC | 170 | 44 | 0.9 |
| 2000/1/0/1.5 | DEAC | 145 | 92 | 1.7 |

EXAMPLE 5

5

Polymerizations with TaCl$_5$/WOCl$_4$ Binuclear Catalyst Activated With TNOA

In Example 5, the procedure of Example 2 is followed; using a 0.05 M solution of TaCl$_5$ reacted with 1.0 equivalent of nonylphenol in toluene in place of the TiCl$_4$ solution. Results are shown below in Table 3. Without the tungsten compound, the tantalum compound is inactive for metathesis polymerization. However, activity of WOCl$_4$ is greatly improved by addition of TaCl$_5$.

TABLE 3

| DCPD/W/Ta/Al Mole Ratio | Exotherm (°C) | Induction Time (seconds) | Residual Monomer (%) |
|---|---|---|---|
| 2000/1/1.4/1.7 | 160 | 90 | 0.4 |
| 2000/1/2.1/1.7 | 150 | 54 | 0.1 |
| 2000/1/2.1/2.4 | 145 | 52 | 0.1 |

## EXAMPLE 6

Polymerizations with NbCl$_5$/WOCl$_4$ Binuclear Catalyst Activated with TNOA

In Example 6, the procedure of Example 2 is followed, using a 0.1 M solution of NbCl$_5$ reacted with 1.0 equivalent of nonylphenol in toluene in place of the TiCl$_4$ solution. Results are shown in Table 4. Without the tungsten compound, the niobium compound is inactive for metathesis polymerization. Activity of the tungsten catalyst is greatly improved by addition of the niobium compound.

TABLE 4

| DCPD/W/Nb/Al Mole Ratio | Exotherm (°C) | Induction Time (seconds) |
|---|---|---|
| 2000/1/3/3 | 145 | 30 |
| 2000/0/3/3 | none | no cure |
| 2000/1/0/3 | 154 | 90 |

## EXAMPLE 7

Polymerizations with MoCl$_5$/WOCl$_4$ Binuclear Catalyst Activated With TNOA

In Example 7, the procedure of Example 2 is followed, except that the TiCl$_4$ solution is replaced with a 0.1 M solution of MoCl$_5$ reacted with one equivalent of nonylphenol in toluene. By itself, MoCl$_5$ causes the DCPD to gel which is unsatisfactory. The results shown in Table 5 demonstrate that MoCl$_5$ is not a suitable component of the binuclear catalyst.

TABLE 5

| DCPD/W/Mo/Al Mole Ratio | Exotherm (°C) | Induction Time (seconds) |
|---|---|---|
| 2000/1/3/3 | 126 | 180 |
| 2000/0/3/3 | gel | 110 |

EXAMPLE 8

Preparation of PolyDCPD in a RIM Process Using A TiCl₄/WOCl₄ Binuclear Catalyst

In Example 8, polymerized dicyclopentadiene is made by RIM processing using a standard RIM machine manufactured by Accuratio Co. of Jeffersonville, Ind. The following description illustrates the procedure for molding. First the desired amount of catalyst-DCPD mixture and activator dicyclopentadiene mixture is charged respectively to two 2 gallon tanks. The tanks are located on different sides of the RIM machine: the tank on the A side is the one to which the activator mixture is added and the tank on the B side is the one to which the catalyst solution is added. If desired, rubber and/or organic resins are added as a predissolved solution in dicyclopentadiene. Also solid fillers are added if desired. The tanks are then closed off and placed under a nitrogen atmosphere.

The first stream ("A component") is prepared from 3.52 liters (7.5 pounds) of DCPD containing 6% by weight of a random styrene-butadiene rubber and 128 ml of a 1.0 M activator concentrate (TNOA/DOAl/DG, 85/15/100 mole ratio) in DCPD. This provides a DCPD/Al mole ratio of about 550/3. The second stream ("B Component") is prepared from 3.52 liters of rubberized DCPD and 900 ml of a binuclear catalyst solution. The catalyst solution, 0.05 M in toluene, contains WOCl₄/C₉PhOH/acac, 1/1/1, to which 1 equivalent of TiCl₄ had been added. This provides a DCPD/W/Ti mole ratio of about 550/1/1. Also added to the B Component is 69 grams of Irganox 1076, (an antioxidant) and 15 ml of rose oxide (a deodorant).

The mixing of the activator solution (A Component) and the catalyst solution (B Component) is accomplished using a standard impingement type RIM mixhead. The ratio of the activator/monomer solution mixed with catalyst/monomer solution is 1:1. The impingement mixing is accomplished by passing both the solutions through orifices 0.032" in diameter at a flow rate of approximately 80 ml/sec. This requires pumping pressure of approximately 1000 psi. The resulting mixture flows directly into a mold heated between 50°C and 60°C. The mold is made out of aluminium and is chrome plated. The mold has a flat cavity that forms a plaque sample 10" x 10" x 1/8" thick. A clamping force of 1.5 tons is used to keep the mold closed. A cross-linked polymer is formed. The finished samples cure in about 8 seconds and are demolded in about 20 seconds.

Physical properties of these samples, in comparison with polydicyclopentadiene prepared according to the method of Klosiewicz are given in Table 6. The properties of the polymer according to the method of Example 5, in the column on the right, are somewhat lower than those of the comparative example. This is due to the large volume of solvent remaining in the parts. However, the residual monomer level is reduced by about one-half.

TABLE 6

| Property | PolyDCPD Klosiewicz | PolyDCPD Example 5 |
|---|---|---|
| | (EP 84 888) | |
| Flexural Modulus (kpsi) | 270 | 231 |
| Flexural Strength (kpsi) | 10 | 7 |
| Tensile Modulus (kpsi) | 200 | 178 |
| Tensile Strength (kpsi) | 5 | 4 |
| Tensile Elongation (%) | 60 | 70 |
| Plate Impact (ft-lb) | 11 | 11 |
| Residual Monomer (%) | about 3 | 1.4 |
| Residual Toluene (%) | less than 1 | 6.9 |

**Claims**

1. A process for making a catalyst suitable for the metathesis polymerization of strained ring cycloolefin monomers such as dicyclopentadiene, and comprising the steps of dissolving a tungsten compound consisting of $WOCl_4$ or a combination of $WOCl_4$ and $WCl_6$ in a solvent; and solubilizing and stabilizing the tungsten compound by adding a phenolic compound and a chelating agent or a Lewis base to the solution of the tungsten compound, characterized in that to the solution of the tungsten compound is added a halide complex of a transition metal selected from the group consisting of Group IVB and Group VB of the Periodic Table in a mole ratio of halide complex of transition metal to the tungsten compound of from about 1:2 to about 2.5:1.

2. A process for making a catalyst as claimed in claim 1, further characterized in that the transition metal halide complex is in a high oxidation state and the transition metal is tantalum, niobium or titanium.

3. A process for making a catalyst as claimed in claim 1 or 2, further characterized in that transition metal halide complex comprises tantalum pentachloride, niobium pentachloride or titanium tetrachloride.

4. A process for making a catalyst as claimed in claim 1, 2, or 3, further characterized in that the phenolic com pound is phenol, an alkyl phenol, a halogenated phenol, or a phenolate salt.

5. A process for making a catalyst as claimed in claim 4, further characterized in that the phenolic compound is t-butyl phenol, octyl phenol or nonyl phenol.

6. A process for making a catalyst as claimed in claim 4, further characterized in that the phenolate salt is lithium phenoxide or sodium phenoxide.

7. A process for making a catalyst as claimed in any of the preceeding claims, further characterized in that the chelating compound is an acetylacetone or an alkyl acetoacetate.

8. A process for making a catalyst as claimed in claim 7, further characterized in that the alkyl group in the chelating compound has one to ten carbon atoms and the chelating compound is present in an amount such that the mole ratio of catalyst to chelating agent is from about 1:1 to about 1:3.

9. A process for making a catalyst as claimed in any of the preceeding claims, further characterized in that the Lewis base is a nitrile or an ether.

10. A process for making a catalyst as claimed in claim 9, further characterized in that the Lewis base is benzonitrile or tetrahydrofuran.

11. Use of the catalyst made by the process claimed in any of claims 1 to 10 to polymerize a strained ring cycloolefin monomer.

12. Use as claimed in claim 11 of the catalyst made by the process claimed in any of claims 1 to 10, further characterized in that the catalyst is dissolved in one part of the monomer, and a catalyst activator is dissolved in the other part of the monomer and both parts are combined in a mixing head and injected into a mold where molding to a permanently fixed shape take place.

13. Use as claimed in claim 11 or 12 of the catalyst made by the process claimed in any of claims 1 to 10, further characterized in that the monomer is dicyclopentadiene.